# FASCICULE DE BREVET EUROPEEN

(11) **EP 3 652 458 B1**
(45) Date de publication et mention de la délivrance du brevet: **17.03.2021**
(21) Numéro de dépôt: 18748974.5
(22) Date de dépôt: 14.06.2018
(51) Int. Cl.: F16D 48/08

(54) **PROCEDE DE CONTROLE D'UN GROUPE MOTOPROPULSEUR POUR EMPECHER UN CALAGE EN BOUCLE LORS DU DECOLLAGE DU VEHICULE**
VERFAHREN ZUR STEUERUNG EINER ANTRIEBSEINHEIT ZUR VERHINDERUNG VON LOOP STALLING WÄHREND DES WEGZIEHENS (START) EINES FAHRZEUGS
METHOD FOR CONTROLLING A PROPULSION UNIT TO PREVENT LOOP STALLING DURING VEHICLE PULL-AWAY (LAUNCH)

(30) Priorité: 13.07.2017 FR 1756650
(43) Date de publication de la demande: 20.05.2020
(73) Titulaire: PSA Automobiles SA, 78300 Poissy (FR)
(72) Inventeur: ROCQ, Gaetan, 78125 La Boissiere Ecole (FR); MILHAU, Yohan, 78630 Orgeval (FR)
(86) Numéro de dépôt international: PCT/FR2018/051407
(87) Numéro de publication internationale: WO 2019/012195

(56) Documents cités:
- EP-A1- 2 082 938
- FR-A1- 2 835 483
- FR-A1- 2 923 566

## Description

Le domaine de l'invention concerne un procédé de contrôle d'un groupe motopropulseur de véhicule automobile pour empêcher un calage en boucle d'un moteur thermique lors d'une phase de décollage du véhicule.

Lors du décollage d'un véhicule automobile, il arrive que le prélèvement de couple moteur pour la transmission aux roues par l'embrayage soit supérieur aux capacités du moteur thermique, notamment lorsque celui-ci fonctionne dans des conditions qui ne sont pas optimales, par exemple un roulage en altitude, forte température ou roulage en mode dégradé sont des causes possibles. Dans le cas d'un embrayage automatisé, le calage peut être provoqué du fait que le prélèvement de couple soit opéré avant que le régime optimal du moteur soit atteint ou du fait que le prélèvement en couple soit supérieur à la capacité du moteur thermique. Il en résulte une chute de régime et le calage du moteur thermique.

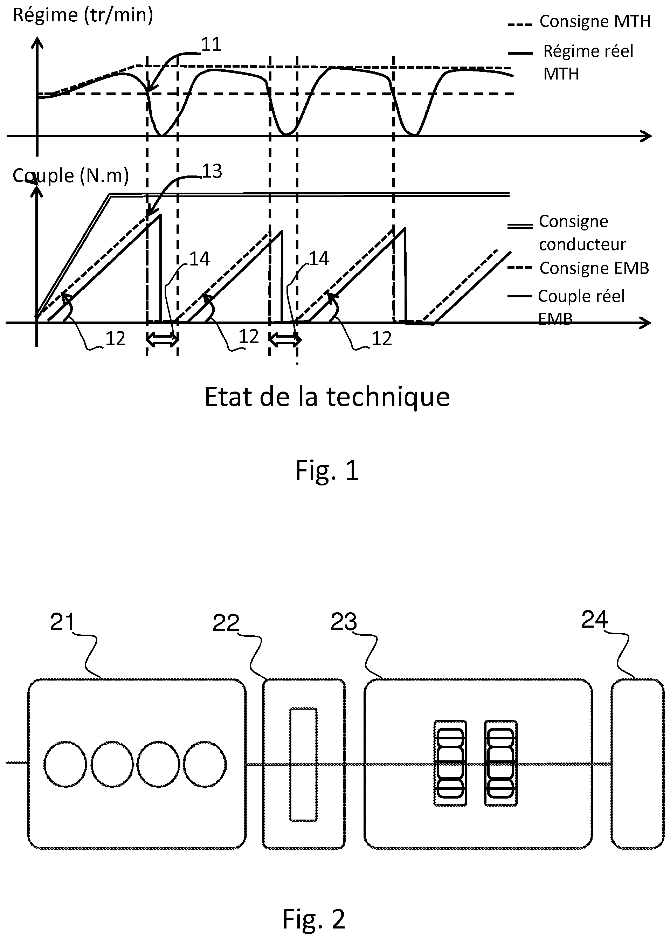

De plus, il est possible que le groupe motopropulseur subisse un phénomène de calage en boucle. Une telle situation est représentée en figure 1 où dans la partie supérieure sont représentés la consigne de régime moteur (trait en pointillé) et le régime réel (trait plein), et dans la partie inférieure les valeurs en couple de la consigne conducteur aux roues à transmettre par le moteur thermique (en double trait), une consigne en couple de l'embrayage (en trait en pointillé) et le couple réel de l'embrayage (en trait plein). Le décollage du véhicule est commandé par une montée en couple transmissible de la consigne de l'embrayage selon une consigne de décollage définie par un gradient de montée en couple 12, généralement de l'ordre de 100 N.m/s ou plus. Lors d'un calage 11 intervenant durant le décollage du véhicule l'embrayage est immédiatement ouvert à l'instant 13. Après une durée d'attente 14 d'environ 200 à 400ms, l'embrayage est autorisé à se refermer et à prélever de nouveau un couple transmissible selon la même consigne de décollage. La transmission de couple de l'embrayage provoque alors des calages en boucle.

On connaît de l'état de la technique le document brevet FR2835483A1 décrivant un procédé qui vise à empêcher un calage. A cet effet, le procédé a pour objectif de détecter un calage possible et à augmenter les seuils de calage pour provoquer une ouverture anticipée de l'embrayage. En comprend que si une situation exceptionnelle de roulage n'est pas prévue par le superviseur du groupe motopropulseur, le moteur thermique entrera dans un calage en boucle.

L'invention vise à palier les problèmes précités notamment en empêchant un calage en boucle provoqué par une situation anormale de roulage non prévue par la stratégie de pilotage d'un embrayage automatisé.

Plus précisément, l'invention concerne un procédé de contrôle d'un groupe motopropulseur de véhicule pour empêcher un calage en boucle d'un moteur thermique à la suite d'un calage intervenant lors d'une phase de décollage du véhicule, dans lequel le procédé commande la transmission de couple d'un dispositif de couplage automatisé selon une consigne de décollage en couple transmissible définie par un premier gradient de montée en couple. Selon l'invention, lors de la détection du calage, la transmission de couple du dispositif de couplage est pilotée selon une consigne de reprise en couple transmissible définie par un deuxième gradient de montée en couple qui est inférieur au premier gradient de la consigne de décollage.

Selon une variante, la transmission de couple du dispositif de couplage selon la consigne de reprise n'est autorisée qu'après l'écoulement d'une première temporisation déclenchée par la détection du calage.

Selon une variante, la première temporisation a une durée configurable pouvant être comprise entre 600ms et 1s.

Selon une variante, lors de la détection du calage, une deuxième temporisation est déclenchée, et la transmission de couple du dispositif de couplage est pilotée selon la consigne de reprise en cas d'une détection d'une demande d'un couple transmissible pendant l'écoulement de la deuxième temporisation, sinon la transmission de couple du dispositif de couplage est pilotée selon la consigne de décollage.

Selon une variante, la deuxième temporisation a une durée configurable pouvant être comprise entre 2 secondes et 10 secondes.

Selon une variante, la valeur du deuxième gradient est constante et le deuxième gradient a une valeur d'environ 50 N.m/s.

Selon une variante, le premier gradient a une valeur comprise entre 100 N.m/s et 500 N.m/s.

Il est prévu selon l'invention un véhicule automobile comportant un groupe motopropulseur comprenant un moteur thermique et un dispositif de couplage automatisé accouplant sélectivement le moteur thermique aux roues, le dit dispositif de couplage étant piloté par un dispositif de contrôle, et dans lequel le dispositif de contrôle exécute le procédé de contrôle selon l'un quelconque des modes de réalisation précédents.

L'invention améliore le procédé de contrôle des dispositifs de couplage automatisé. Les calages en boucle sont empêchés en modifiant temporairement la consigne de décollage par une consigne de reprise prévue pour réduire l'impact du prélèvement du couple embrayage. Le procédé traite ainsi le problème des calages multiples provoqués par des situations de roulage exceptionnelles. Le pilotage de l'embrayage améliore les prestations de conduites en terme d'agrément acoustique et vibratoire en évitant les trous de couple, chocs ou oscillations provoquées par des calages répétitifs. On réduit également le temps pour le décollage du véhicule et l'énergie dissipée dans l'embrayage. Finalement, on réduit également la pollution du véhicule en évitant les redémarrages multiples du moteur thermique.

D'autres caractéristiques et avantages de la présente invention apparaîtront plus clairement à la lecture de la description détaillée qui suit comprenant des modes de réalisation de l'invention donnés à titre d'exemples nullement limitatifs et illustrés par les dessins annexés, dans lesquels :
- la figure 1, déjà décrite lors de la description de l'état de la technique, représente une séquence d'un procédé de contrôle conventionnel du groupe motopropulseur d'un véhicule affecté par un calage en boucle;
- la figure 2 représente un schéma simplifié d'une architecture de groupe motopropulseur apte à mettre en œuvre l'invention ;
- la figure 3 représente un synoptique fonctionnel des fonctions de pilotage exécutées par le dispositif de contrôle du groupe motopropulseur ;
- la figure 4 représente une séquence du procédé de contrôle selon l'invention durant laquelle apparait un calage du moteur thermique ;
- La figure 5 représente une variante de la séquence du procédé de contrôle selon l'invention durant laquelle apparaît un calage du moteur thermique et à la suite duquel la demande de couple moteur disparaît temporairement.

L'invention s'applique à tout type de véhicule automobile dans lequel le groupe motopropulseur comprend un embrayage automatisé et un moteur thermique de traction pouvant être affecté d'un calage. La figure 2 représente un groupe motopropulseur comprenant une chaine de traction dans laquelle un moteur thermique 21 est relié en transmission aux roues 24 par l'intermédiaire d'un dispositif de couplage automatisé 22. Le dispositif de couplage 22 peut accoupler sélectivement le moteur thermique 21 aux roues 24 en fonction d'une consigne de couple transmissible. Une boite de vitesses 23 relie en transmission le dispositif de couplage 22 aux roues 24 permettant ainsi l'introduction d'un rapport de démultiplication. Le dispositif de couplage automatisé 22 est un embrayage piloté en couple par un dispositif de contrôle selon une consigne de couple transmissible entre le moteur thermique 21 et la boite de vitesses 23. La consigne de couple transmissible est élaborée par une fonction de pilotage prenant en compte la volonté du conducteur et les stratégies de coordination du groupe motopropulseur, notamment les stratégies énergétiques et d'agrément de conduite.

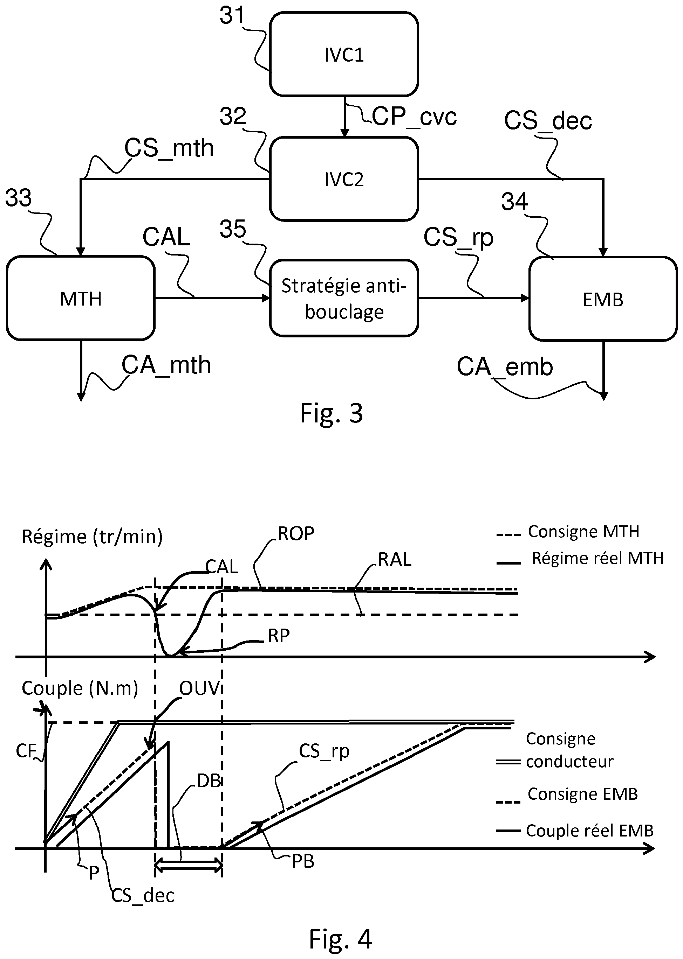

La figure 3 représente des modules de pilotage du groupe motopropulseur exécutés par le dispositif de contrôle du groupe motopropulseur, couramment appelé superviseur, unité de commande ou par l'acronyme ECU pour « Electronic Control Unit » en anglais. Conventionnellement, le dispositif de contrôle comporte un ou plusieurs calculateurs à circuits intégrés couplés à des mémoires et destinés à exécuter des fonctions de pilotage pour le fonctionnement du groupe motopropulseur. En particulier, les mémoires enregistrent une fonction de pilotage contenant les instructions d'exécution du procédé de contrôle selon l'invention.

Un premier module d'interface 31 calcule une consigne de couple de la volonté du conducteur CP_cvc à partir de l'interface de pilotage de l'habitacle en fonction de paramètres d'accélération ou de freinage provenant des dispositifs de commande de la vitesse du véhicule, tels qu'une mesure de la position d'une pédale d'accélération ou d'une pédale de freinage par un capteur proportionnel, ou bien de la vitesse d'enfoncement ou de l'accélération d'enfoncement des pédales. Un deuxième module de répartition 32 calcule des consignes de couple à répartir entre les actionneurs en couple du groupe motopropulseur, notamment les consigne de couple moteur CS_mth à destination d'un troisième module de pilotage 33 du moteur thermique 21 et les consignes de couple transmissible, parmi lesquelles une consigne de décollage CS_dec, à destination d'un quatrième module de pilotage 34 de l'embrayage 22. Le module de pilotage 33 du moteur thermique émet une commande de couple moteur CA_mth à destination du moteur 21 et le module de pilotage 34 émet une commande de couplage CA_emb à destination de l'actionneur d'embrayage 22. On notera que le module de pilotage 33 est apte à émettre un signal CAL indiquant un événement de calage.

Plus précisément, lors d'un décollage du véhicule la consigne de décollage CS_dec commande un couple transmissible aux roues dont le profil est de la forme d'une rampe, à partir d'un couple transmissible nul jusqu'à atteindre un couple transmissible, égal ou supérieur au couple moteur aux roues à transmettre aux roues, élaboré en fonction de la consigne de couple de la volonté du conducteur CP_cvc. On ajoutera que le profil de la consigne de décollage CS_dec n'est en aucun cas limité à une forme de rampe, mais peut être de la forme de tout profil de montée en couple transmissible pour le décollage du véhicule.

La figure 4 illustre une phase de décollage du véhicule selon une première situation de roulage et sur laquelle on a représenté en partie supérieure la consigne du régime du moteur thermique 21 (trait en pointillé) et le régime réel du moteur thermique 21 (trait plein). Une ligne horizontale en trait pointillé RAL indique le régime de ralenti et la valeur de régime optimal ROP à atteindre pour le décollage, ce régime optimal étant supérieur au régime de ralenti. Typiquement le régime de ralenti est situé autour des 700 à 900 tr/min et le régime optimal autour de 1100 à 1300 tr/min.

En partie inférieure, on a représenté la valeur de la consigne de couple de la volonté du conducteur CP_cvc (en double trait) et la consigne de décollage CS_dec (trait pointillé) en couple transmissible de l'embrayage 22 et le couple transmissible réel de l'embrayage 22 (trait plein). Comme on le voit sur la figure 4, afin de maîtriser une prestation de conduite satisfaisante, notamment en terme de performance, consommation, acoustique et durabilité, la consigne de décollage CS_dec suit dans cet exemple un profil en forme de rampe définie par un premier gradient de montée en couple P. Le premier gradient P est calculé selon la consigne CP_cvc et un filtre de décollage garantissant la qualité de prestation de conduite, notamment un temps maximum de réponse et un gradient de montée en couple défini entre des bornes acceptables pour l'agrément de conduite, par exemple le premier gradient de montée en couple peut être compris entre 100 N.m/s et 500 N.m/s. Le premier gradient de montée en couple P correspond à la variation de couple transmissible entre la valeur de couple transmissible initiale de valeur nulle et la valeur de couple transmissible finale CF selon la consigne conducteur.

Toutefois, comme cela a déjà été évoqué précédemment dans la description, des conditions de roulage exceptionnelles entrainent le calage du moteur thermique lors du prélèvement du couple transmissible par l'embrayage 22. La chute du régime réel du moteur thermique 21 sous le régime de ralenti RAL provoque ce calage. Le dispositif de contrôle est apte à détecter l'événement de calage CAL du moteur thermique, notamment en surveillant la valeur du régime réel du moteur thermique 21 par rapport au régime de ralenti RAL et si un signal d'état indique un besoin en état démarré du moteur thermique 21. Ces données sont connues du module de pilotage 33 du moteur thermique 21. Lors de la détection d'un calage, indiqué par la référence CAL, un signal d'information est émis à destination d'un module de pilotage 35 dont la fonction est d'empêcher un calage en boucle.

Par ailleurs, lors de la détection d'un calage CAL du moteur thermique 21, le dispositif de contrôle commande immédiatement et successivement, l'ouverture l'embrayage 22, indiquée par la référence OUV sur la figure 4, et le démarrage du moteur thermique 21, indiqué par la référence RP. Plus précisément, le couple transmissible est piloté à une valeur nulle et le régime du moteur thermique est piloté au régime optimal. On notera que dans cette situation, à la suite du calage la consigne du régime moteur et la consigne du couple de la volonté conducteur n'ont pas varié.

Afin d'éviter de nouveau un calage du moteur thermique, à la suite de la détection du calage CAL, le module de pilotage 35, illustré en figure 3 et qui en charge de l'application de la stratégie anti-bouclage, commande la transmission de couple de l'embrayage 22, à la différence cette fois que la dite transmission de couple est pilotée selon une consigne de reprise CS_rp en couple transmissible, définie par un deuxième gradient de montée en couple PB qui est inférieur au premier gradient P de la consigne de décollage CS_dec. La consigne de reprise CS_rp est calculée selon un filtre de reprise appliquant un gradient de montée en couple inférieur au gradient de la consigne de décollage CS_dec pour une même valeur de la consigne conducteur CP_cvc. Dans un mode de réalisation, lorsque la consigne de reprise CS_rp est de la forme d'une rampe, le deuxième gradient a une valeur constante, établie par exemple à 50 N.m/s. Toutefois, il est envisageable que le deuxième gradient PB soit calculé en fonction de la consigne de décollage CS_dec de manière que le dit deuxième gradient soit inférieur au premier gradient P selon une marge prédéterminée. Le deuxième gradient de montée en couple PB correspond à la variation de couple transmissible entre la valeur initiale nulle, et la valeur de couple transmissible finale CF de la consigne conducteur.

La valeur du deuxième gradient a pour effet de réduire l'impact du prélèvement du couple transmissible par l'embrayage lors du décollage. A cet effet, la stratégie anti-bouclage permet au moteur thermique 21 d'augmenter son couple moteur pour atteindre la valeur de la consigne de la volonté conducteur sans chute de régime moteur. Ainsi, le moteur thermique est en capacité d'atteindre le régime moteur optimal ROP et d'assurer le décollage.

De plus, on n'écarte pas la possibilité que la valeur de couple final de la consigne de reprise CS_rp soit supérieure au couple de la consigne conducteur afin d'assurer le verrouillage de l'embrayage 22 et éviter l'apparition d'un glissement.

Dans une variante, comme on le voit sur la figure 4, pour permettre la montée en régime du moteur thermique à la suite du calage CAL et la stabilisation du régime moteur sur le régime optimal ROP avant le début du prélèvement en couple par l'embrayage 22, la transmission de couple de l'embrayage 22 selon la consigne de reprise CS_rp n'est autorisée qu'après l'écoulement d'une première temporisation DB déclenchée par la détection du calage CAL. La première temporisation prédéterminée DB a une valeur configurable comprise par exemple entre 600ms et 1s. Malgré la requête d'une demande en couple aux roues durant l'écoulement de la première temporisation DB, le procédé empêche la transmission de couple. La transmission de couple de l'embrayage selon la consigne de reprise CS_rp se déclenche à l'instant de détection de la fin de la première temporisation DB.

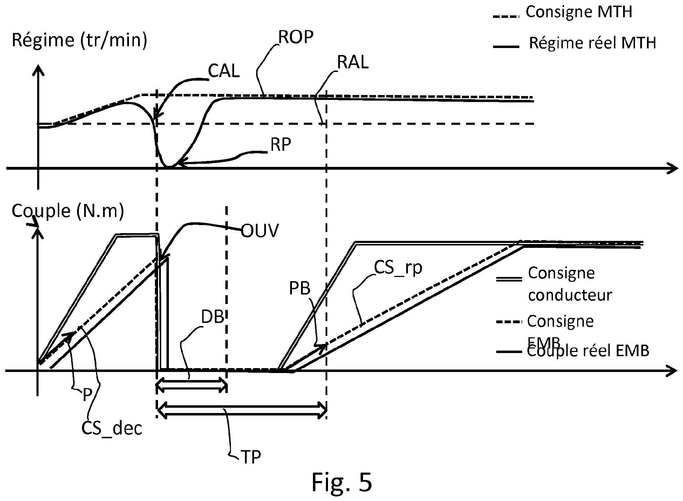

En figure 5, on a représenté une deuxième situation de roulage différente de celle décrite précédemment. Les références et courbes utilisées pour la figure 5 sont identiques à celles de la figure 4. La situation de roulage se distingue par la disparition de la consigne de couple de la volonté du conducteur, et donc de la demande en couple transmissible, à la suite du calage provisoirement. La demande en couple conducteur réapparait après l'écoulement de la première temporisation DB. Dans cette situation, le procédé prévoit que lors de la détection du calage, une deuxième temporisation TP est déclenchée, et la transmission de couple de l'embrayage est pilotée selon la consigne de reprise CS_rp en cas d'une détection d'une demande d'un couple transmissible pendant l'écoulement de la deuxième temporisation TP. La consigne CS_rp présente le même profil que celui décrit en figure 4. De cette manière, le procédé traite une des causes du calage dans le cas où celui-ci aurait été provoqué par un gradient de la consigne de décollage trop important. Le procédé prévoit que la deuxième temporisation TP ait une durée configurable comprise par exemple entre 2 secondes et 10 secondes.

Dans le cas contraire, si la demande apparaît après cette deuxième temporisation TP, la transmission de couple de l'embrayage est pilotée selon la consigne de décollage CS_dec. On considère que les conditions de démarrage permettent un décollage tel que prévu par défaut. Dans cette situation, le procédé pilote le décollage du véhicule selon un profil de reprise conforme à l'agrément de conduite prévu par défaut et évite un bridage inutile des prestations.

## Revendications

1. Procédé de contrôle d'un groupe motopropulseur de véhicule pour empêcher un calage en boucle d'un moteur thermique (21) à la suite d'un calage (CAL) intervenant lors d'une phase de décollage du véhicule, dans lequel le procédé commande la transmission de couple d'un dispositif de couplage automatisé (22) selon une consigne de décollage (CS_dec) en couple transmissible définie par un premier gradient de montée en couple (P), le procédé étant **caractérisé en ce que** lors de la détection du calage (CAL), la transmission de couple du dispositif de couplage (22) est pilotée selon une consigne de reprise (CS_rp) en couple transmissible définie par un deuxième gradient de montée en couple (PB) qui est inférieur au premier gradient (P) de la consigne de décollage (CS_dec).

2. Procédé selon la revendication 1, **caractérisé en ce que** la transmission de couple du dispositif de couplage selon la consigne de reprise (CS_rp) n'est autorisée qu'après l'écoulement d'une première temporisation (DB) déclenchée par la détection du calage (CAL).

3. Procédé selon la revendication 2, **caractérisé en ce que** la première temporisation (DB) a une durée configurable comprise entre 600ms et 1s.

4. Procédé selon l'une quelconque des revendications 2 à 3, **caractérisé en ce que**, lors de la détection du calage (CAL), une deuxième temporisation (TP) est déclenchée, et la transmission de couple du dispositif de couplage est pilotée selon la consigne de reprise (CS_rp) en cas d'une détection d'une demande d'un couple transmissible pendant l'écoulement de la deuxième temporisation (TP), sinon la transmission de couple du dispositif de couplage est pilotée selon la consigne de décollage (CS_dec).

5. Procédé selon la revendication 4, **caractérisé en ce que** la deuxième temporisation (TP) a une durée configurable comprise entre 2 secondes et 10 secondes.

6. Procédé selon l'une quelconque des revendications 1 à 5, **caractérisé en ce que** la valeur du deuxième gradient (PB) est constante.

7. Procédé selon la revendication 6, **caractérisé en ce que** le deuxième gradient (PB) a une valeur d'environ 50 N.m/s.

8. Procédé selon l'une quelconque des revendications 1 à 7, **caractérisé en ce que** le premier gradient (P) a une valeur comprise entre 100 N.m/s et 500 N.m/s.

9. Véhicule automobile comportant un groupe motopropulseur comprenant un moteur thermique (21) et un dispositif de couplage automatisé (22) accouplant sélectivement le moteur thermique aux roues, le dit dispositif de couplage (22) étant piloté par un dispositif de contrôle, **caractérisé en ce que** le dispositif de contrôle exécute le procédé de contrôle selon l'une quelconque des revendications précédentes.

## Patentansprüche

1. Verfahren zum Steuern eines Fahrzeugantriebsstrangs, um ein Schleifenstillstand einer Wärmekraftmaschine (21) nach einem Blockieren (CAL) während einer Startphase des Fahrzeugs zu verhindern, wobei das Verfahren das
Übertragungsdrehmoment einer automatisierten Kupplungsvorrichtung (22) gemäß steuert auf einen
gewünschten Abzug (CS_dec) Drehmoment transmissible definiert durch einen ersten Gradienten Drehmomentanstieg (P), wobei das Verfahren **dadurch gekennzeichnet, daß** während der Erfassung der Kalibrierung (CAL), das Übertragungsdrehmoment der
Kupplungsvorrichtung (22) wird gesteuert entsprechend einem gewünschten Rückgewinnung (CS_rp) Drehmoment transmissible definiert durch einen zweiten Gradienten Drehmomentanstieg (PB), das ist an der ersten Gradienten unteren (P) der Startanweisung (CS_dec).

2. Verfahren nach Anspruch 1, **dadurch gekennzeichnet, daß** die Drehmomentübertragung von der Kupplungseinrichtung zu entsprechend die Sollrückgewinnung (CS_rp) ist, dass erlaubt nach dem Verstreichen einer durch ausgelöst erste Zeitverzögerung (DB) der Erfassungszeitpunkt (CAL).

3. Verfahren nach Anspruch 2, **dadurch gekennzeichnet, dass** die erste Zeitverzögerung (DB) eine konfigurierbare Dauer zwischen 600 ms und 1 s aufweist.

4. Verfahren nach einem der Ansprüchen 2 bis 3, **dadurch gekennzeichnet**, bei Erfassung Timing (CAL), ein zweiter Zeitgeber (TP) ausgelöst wird , und das Übertragungsdrehmoment der Kupplungsvorrichtung wird entsprechend gesteuert, den Neustart - Sollwert (CS_rp) im Fall der Erfassung einer Anforderung für ein übertragbares Drehmoment während des Ablaufs der zweiten Zeitverzögerung (TP), ansonsten wird die Drehmomentübertragung von der Kupplungsvorrichtung wird entsprechend den
gesteuerten Abheben Sollwert (CS_dec).

5. Verfahren nach Anspruch 4, **dadurch gekennzeichnet, dass** die zweite Zeitverzögerung (TP) eine konfigurierbare Dauer zwischen 2 Sekunden und 10 Sekunden aufweist.

6. Verfahren nach einem der Ansprüche 1 bis 5, **dadurch gekennzeichnet, dass** der Wert des zweiten Gradienten (PB) konstant ist.

7. Verfahren nach Anspruch 6, **dadurch gekennzeichnet, dass** der zweite Gradient (PB) einen Wert von ungefähr 50 Nm / s hat.

8. Verfahren nach einem der Ansprüche 1 bis 7, **dadurch gekennzeichnet, dass** der erste Gradient (P) einen Wert zwischen 100 Nm / s und 500 Nm / s aufweist.

9. Kraftfahrzeug einen Antriebsstrang, umfassend eine
Wärmekraftmaschine, umfassend (21) und
eine automatische Kupplungsvorrichtung (22) wahlweise Koppeln der Wärmekraftmaschine zu den Rädern, wobei
die Kupplungsvorrichtung (22) wird durch eine Steuereinrichtung gesteuert ist, **gekennzeichnet durch** , dass die Steuervorrichtung führt das Steuerverfahren gemäß einem der vorhergehenden Ansprüche aus.

## Claims

1. Method of controlling a vehicle powertrain to prevent a loop stalling of a heat engine (21) following a stall (CAL) occurring during a takeoff phase of the vehicle , in which the method controls the transmission torque of a coupling device automated (22) according to a desired take-off (CS_dec) torque transmissible defined e by a first gradient torque rise (P), the method being **characterized in that** during the detection of
the calibration (CAL), the transmission torque of the coupling device (22) is controlled according to a
desired recovery (CS_rp) torque transmissible defined e by a second gradient Torque rise (PB) which is lower at the first gradient (P) of the take-off instruction (CS_dec).

2. Method according to claim 1, **characterized in that** the torque transmission of the coupling device according to the setpoint recovery (CS_rp) n ' is allowed that after the lapse of a first time delay (DB) triggered by the detection timing (CAL).

3. Method according to claim 2, **characterized in that** the first time delay (DB) has a configurable duration of between 600ms and 1 s.

4. Method according to any one of Claim s 2 to 3, **characterized in that**, upon detection timing (CAL), a second timer (TP) is triggered, and the transmission torque of the coupling device is controlled according
to the restart setpoint (CS_rp) in the event of detection of a request for a transmissible torque during the expiration of the second time delay (TP), otherwise the torque transmission from the coupling device is controlled according to the takeoff setpoint (CS_dec).

5. Method according to Claim 4, **characterized in that** the second time delay (TP) has a configurable duration of between 2 seconds and 10 seconds.

6. Method according to any one of claims 1 to 5, **characterized in that** the value of the second gradient (PB) is constant.

7. Method according to claim 6, **characterized in that** the second gradient (PB) has a value of approximately 50 Nm / s.

8. Method according to any one of claims 1 to 7, **characterized in that** the first gradient (P) has a value between 100 Nm / s and 500 Nm / s.

9. Motor vehicle comprising a powertrain comprising a heat engine (21) and
an automated coupling device (22) selectively coupling the heat engine to the wheels, said coupling device (22) being controlled by a control device, **characterized by** that the control device executes the control method according to any one of the preceding claims.
